Europäisches Patentamt

European Patent Office

Office européen des brevets

(19)

(11) Numéro de publication : **0 096 642**
**B1**

(12) **FASCICULE DE BREVET EUROPÉEN**

(45) Date de publication du fascicule du brevet :
**20.08.86**

(51) Int. Cl.⁴ : **H 02 M 3/335**

(21) Numéro de dépôt : **83401149.6**

(22) Date de dépôt : **07.06.83**

(54) **Convertisseur d'alimentation à découpage.**

(30) Priorité : **07.06.82 FR 8209886**

(43) Date de publication de la demande :
**21.12.83 Bulletin 83/51**

(45) Mention de la délivrance du brevet :
**20.08.86 Bulletin 86/34**

(84) Etats contractants désignés :
**AT BE CH DE GB IT LI LU NL SE**

(56) Documents cités :
**EP-A- 0 044 663**

(73) Titulaire : **COMPAGNIE DE SIGNAUX ET D'ENTREPRI-SES ELECTRIQUES**
**17, place Etienne-Pernet**
**F-75738 Paris Cedex 15 (FR)**

(72) Inventeur : **Deprez, Louis**
**7, rue Mirabeau**
**F-91120 Palaiseau (FR)**
Inventeur : **Klein, Denys**
**79, rue de Paris**
**F-91400 Orsay (FR)**

(74) Mandataire : **Chameroy, Claude et al**
**c/o Cabinet Malemont 42, avenue du Président Wilson**
**F-75116 Paris (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

## Description

La présente invention concerne un convertisseur d'alimentation à découpage présentant une très faible réjection sur la source.

Une structure très connue permet d'obtenir une très faible réjection, mais avec un régime essentiellement élévateur de tension, ce qui peut présenter des inconvénients dans certaines applications particulières.

On connaît également une structure plus complexe permettant de ramener la tension de sortie au niveau de la tension d'entrée, mais avec une polarité qui est systématiquement inversée par rapport à la polarité d'entrée, ce qui peut également présenter des inconvénients.

La présente invention a donc pour but principal de remédier à tous ces inconvénients et, pour ce faire, elle a pour objet un convertisseur d'alimentation à découpage comprenant une inductance primaire en série avec un organe de découpage commandé placés entre les deux bornes d'une source d'alimentation continue, un agencement en série d'une inductance secondaire couplée magnétiquement à l'inductance primaire et d'un premier élément redresseur, et un agencement en parallèle d'un condensateur et d'une charge dont une extrémité est connectée à une des extrémités de l'agencement en série susdit et donc l'autre extrémité est connectée à une des bornes de la source d'alimentation continue, caractérisé en ce qu'un pont diviseur capacitif constitué de deux condensateurs en série est branché entre les deux bornes de la source d'alimentation continue, l'autre extrémité de l'agencement en série susdit, est connectée au point milieu du pont diviseur capacitif et en ce qu'un dispositif d'équilibrage est prévu pour équilibrer en permanence le pont diviseur capacitif, ce dispositif d'équilibrage étant constitué par une inductance de stockage d'énergie connectée d'une part au point milieu du pont diviseur capacitif et d'autre part au point de jonction d'un second et d'un troisième éléments redresseurs montés en série et en sens inverse entre la borne de la source d'alimentation continue connectée à l'autre extrémité de la charge et l'extrémité de l'inductance secondaire éloignée du point milieu du pont diviseur capacitif.

Ainsi qu'on le verra plus clairement par la suite, une telle structure permet d'ajuster facilement le rapport du transfert de tension en jouant sur le rapport du pont diviseur, tout en conservant la caractéristique d'un courant d'entrée quasi continu. Généralement, on désire obtenir une tension de sortie égale ou inférieure à la tension d'entrée et dans ce cas, le rapport du pont diviseur est simplement égal ou inférieur à un demi. De plus, la polarité de la tension de sortie est identique à celle de la tension d'entrée, le OV étant commun.

Dans une forme de réalisation particulière de l'invention, le premier élément redresseur est constitué par une diode connectée entre la charge et l'extrémité de l'inductance secondaire éloignée du point milieu du pont diviseur capacitif, tandis que le second et le troisième éléments redresseurs sont constitués par deux diodes montées tête-bêche.

Selon une variante de réalisation de l'invention, applicable notamment à l'alimentation d'un circuit d'utilisation non linéaire en régime de démarrage, le premier élément redresseur est constitué par un thyristor connecté entre le point milieu du pont diviseur capacitif et l'inductance secondaire, le second élément redresseur est constitué par un thyristor et le troisième élément redresseur est constitué par une diode, tandis que l'extrémité de l'inductance secondaire située du côté du point milieu du pont diviseur capacitif est reliée aux deux extrémités de ce pont diviseur respectivement par une diode et par un autre thyristor, la commutation sélective de ces différents thyristors permettant de passer successivement d'un régime abaisseur de tension à un régime en pont dynamique non élévateur de tension, puis à un régime élévateur de tension.

Plusieurs formes d'exécution de l'invention sont décrites ci-après à titre d'exemples, en référence aux dessins annexés dans lesquels :

la figure 1 est un schéma partiellement synoptique d'un convertisseur d'alimentation à découpage conforme à l'invention ;

la figure 2 est un schéma illustrant le fonctionnement de ce convertisseur dans sa première phase ;

la figure 3 est un schéma illustrant le fonctionnement de ce convertisseur dans sa deuxième phase ;

la figure 4 est un schéma partiellement synoptique d'une variante de réalisation de l'invention pouvant fonctionner suivant différents régimes ; et

la figure 5 est un diagramme illustrant les différents régimes de fonctionnement de cette variante de réalisation.

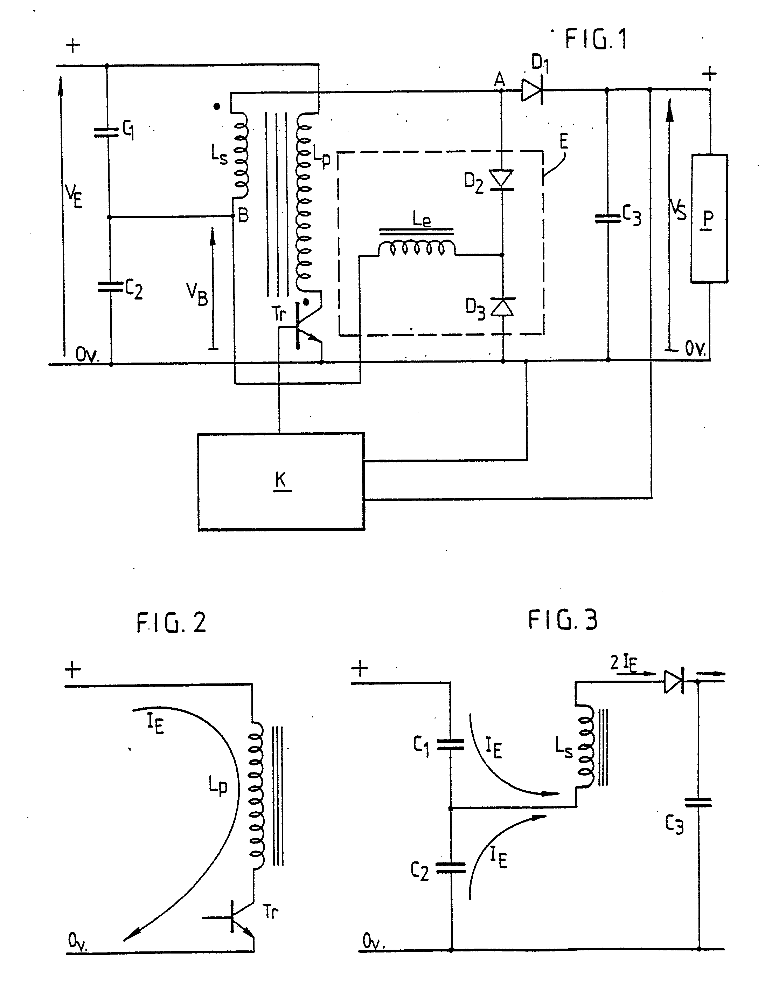

Le convertisseur représenté sur la figure 1 comprend tout d'abord, entre les deux bornes OV et + d'une source d'alimentation continue, une inductance primaire $L_p$ connectée en série avec un organe de découpage constitué ici par un transistor Tr recevant sur sa base des impulsions de commande provenant d'un régulateur de découpage K. Entre les deux bornes de la source d'alimentation est également connecté un pont diviseur capacitif constitué de deux condensateurs $C_1$ et $C_2$. Une inductance secondaire $L_s$ est par ailleurs couplée à l'inductance primaire $L_p$. Cette inductance secondaire est connectée entre le point milieu B du pont diviseur capacitif et la charge P par l'intermédiaire d'une diode en série $D_1$ et d'un condensateur en parallèle $C_3$.

Dans une première phase de fonctionnement, lorsque le transistor Tr est saturé, le courant d'entrée $I_E$ est utilisé principalement pour stocker l'énergie dans l'inductance primaire $L_p$, comme illustré par la figure 2.

Cette technique de stockage d'énergie en régime impulsionnel, dans un noyau magnétique, a fait l'objet d'une description dans la demande de brevet français N° 82 04775 déposée le 19 mars 1982, au nom de la société demanderesse, mise à la disposition du public le 23 septembre 1983 sous le N° FR-A-2 523 741.

Dans une deuxième phase de fonctionnement, correspondant au blocage de transistor Tr, le courant d'entrée $I_E$ passant par $C_1$ vient s'ajouter au courant issu de $C_2$ et passe ensuite dans l'inductance secondaire $L_s$, comme illustré par la figure 3. Le sens de raccordement de $L_s$ est tel que la tension à ses bornes vient s'ajouter à la tension $V_B$ au point milieu B du pont diviseur capacitif $C_1$-$C_2$. De plus, la valeur de cette inductance est fonction du rapport du pont diviseur.

Généralement, on souhaite obtenir dans un fonctionnement nominal, une tension de sortie $V_S$ voisine de la tension d'entrée $V_E$. $C_1$ étant égal à $C_2$, le rapport du pont diviseur est égal à un demi et la tension disponible aux bornes de l'inductance secondaire $L_s$ doit alors être égale à $V_E/2$ ou $V_S/2$. $L_s$ doit donc avoir deux fois moins de spires que $L_p$, de sorte que l'on a alors $L_p = 4 L_s$.

Dans ces conditions, la tension de sortie $V_S$ est égale à la tension d'entrée $V_E$ et de même polarité, le OV constituant une ligne commune pour un tel convertisseur.

On notera cependant qu'au cours de la deuxième phase de fonctionnement, le condensateur $C_1$ est traversé par le courant d'entrée $I_E$, ce qui a pour conséquence d'augmenter la tension à ses bornes, tandis que simultanément, le condensateur $C_2$, qui n'est soumis à aucun apport d'énergie extérieure, se décharge progressivement en fournissant un courant égal à $I_E$.

La condition initiale $V_B = V_E/2$ ne pourrait donc plus se maintenir en l'absence d'intervention et il est par conséquent nécessaire de prévoir un dispositif d'équilibrage tel que E pour rééquilibrer en permanence le pont diviseur capacitif. L'action de ce dispositif consiste à transférer la charge excédentaire de $C_1$ sur $C_2$.

Dans l'exemple particulier décrit ici, il s'agit en fait d'un convertisseur abaisseur de tension comprenant deux diodes $D_2$ et $D_3$, montées tête-bêche entre la sortie A de l'inductance secondaire $L_s$ et le OV, et une inductance $L_e$ connectée entre le point milieu B du pont diviseur et le point de jonction des deux diodes. La diode $D_2$ garantit la commutation de l'inductance $L_e$ seulement lorsque le point A est positif, tandis que la diode $D_3$, dite de roue libre, récupère l'énergie stockée dans $L_e$ et le condensateur de filtrage constitué par l'équivalent de $C_1$ et $C_2$.

L'énergie de ce dispositif d'équilibrage E est la conséquence des deux phases de fonctionnement précédemment décrites, de sorte que le taux de fluctuation du courant d'entrée n'en est pas affecté et se trouve ainsi uniformément réparti.

Dans certaines applications particulières, notamment l'alimentation d'un circuit d'utilisation non linéaire en régime de démarrage, par exemple un moteur ou une lampe à décharge, il peut être utile de pouvoir passer d'une configuration abaisseuse de tension à faible débit, à la configuration non élévatrice de tension, puis ensuite à une configuration élévatrice de tension, et ce à l'aide d'un nombre limité d'organes.

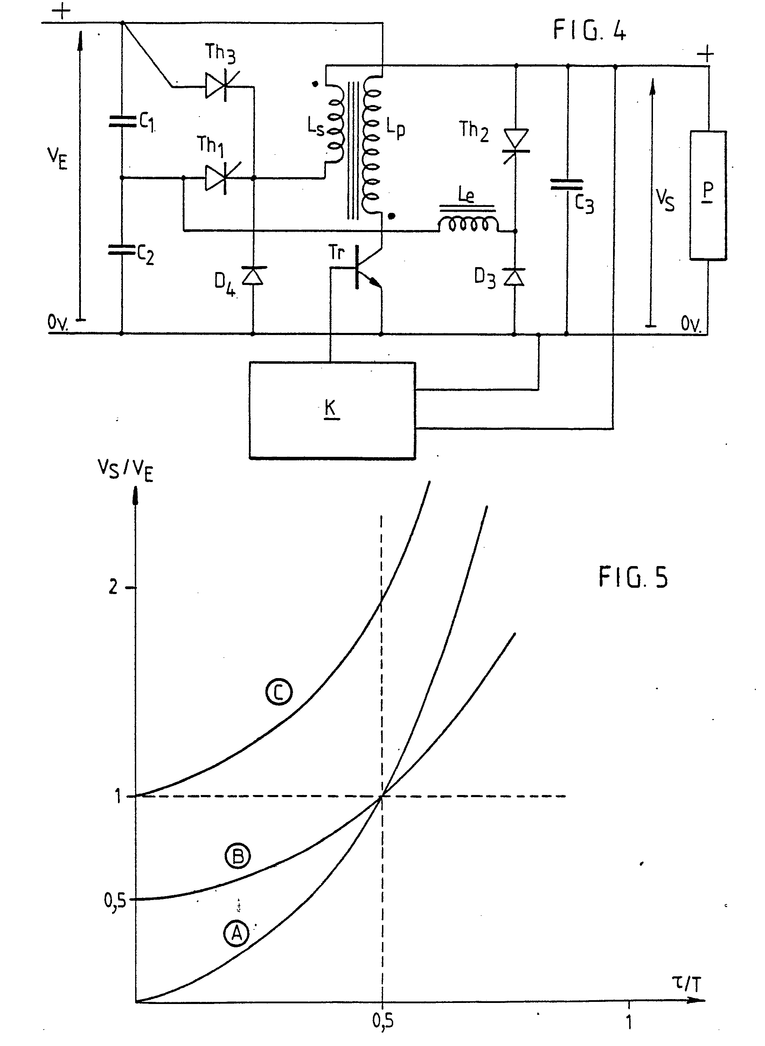

Le schéma de la figure 4 représente précisément un tel convertisseur permettant d'obtenir facilement plusieurs régimes de fonctionnement.

Dans cette variante de réalisation, la diode série $D_1$ se trouve ramenée en amont de l'inductance secondaire $L_s$ et elle est remplacée par un thyristor $Th_1$. De même, la diode $D_2$ du dispositif d'équilibrage est remplacée par un thyristor $Th_2$. Enfin, l'entrée de l'inductance secondaire $L_s$ est reliée au OV de la source d'alimentation par une diode $D_4$ et au pôle positif par un autre thyristor $Th_3$.

Lorsque les trois thyristors $Th_1$, $Th_2$ et $Th_3$ sont bloqués, la diode $D_4$ permet la restitution à partir du potentiel OV. On obtient alors un régime abaisseur de tension, comme illustré par la courbe A de la figure 5 qui représente le rapport de transfert $V_S/V_E$ en fonction du rapport cyclique $\tau/T$, T étant la période et $\tau$ la durée de conduction du transistor de découpage Tr.

Lorsque les thyristors $Th_1$ et $Th_2$ sont rendus conducteurs et que le thyristor $Th_3$ est bloqué, la diode $D_4$ est également automatiquement bloquée. On retrouve alors la configuration en pont dynamique de la figure 1 qui correspond à un régime non élévateur de tension, comme illustré par la courbe B de la figure 5.

Enfin, lorsque le thyristor $Th_3$ est rendu conducteur et que les thyristors $Th_1$ et $Th_2$ sont bloqués, la configuration élévatrice de tension est satisfaite et répond alors à la courbe C de la figure 5.

On voit donc en définitive que le convertisseur d'alimentation à découpage selon l'invention présente une très grande souplesse d'utilisation due à la dynamique excellente que lui procure le passage par étapes d'une configuration à la suivante.

**Revendications**

1. Convertisseur d'alimentation à découpage comprenant une inductance primaire ($L_p$) en série avec un organe de découpage commandé ($T_r$) placés entre les deux bornes d'une source d'alimentation continue, un agencement en série d'une inductance secondaire ($L_s$) couplée magnétiquement à l'inductance primaire ($L_p$) et d'un premier élément redresseur ($D_1$ ou $Th_1$), et un agencement en parallèle d'un condensateur ($C_3$) et d'une charge (P) dont une extrémité est connectée à une des extrémités de l'agencement en série susdit ($L_s$, $D_1$, ou $Th_1$) et dont l'autre extrémité est connectée à une des bornes de la source d'alimentation continue, caractérisé en ce qu'un pont diviseur capacitif constitué de deux condensateurs ($C_1$, $C_2$) en série est branché entre les deux bornes de la source d'alimentation continue, l'autre extrémité de l'agencement en série susdit ($L_s$, $D_1$, ou $Th_1$) est connectée au point milieu (B) du pont diviseur capacitif et en ce qu'un dispositif d'équilibrage (E) est prévu pour équilibrer en permanence le pont diviseur capacitif ($C_1$, $C_2$), ce dispositif d'équilibrage étant constitué par une inductance de stockage d'énergie ($L_e$) connectée d'une part au point milieu (B) du pont diviseur capacitif ($C_1$, $C_2$) et d'autre part au point de jonction d'un second ($D_2$ ou $Th_2$) et d'un troisième ($D_3$) éléments redresseurs montés en série et en sens inverse entre la borne (OV) de la source d'alimentation continue connectée à l'autre extrémité de la charge (P) et l'extrémité (A) de l'inductance secondaire ($L_s$) éloignée du point milieu (B) du pont diviseur capacitif ($C_1$, $C_2$).

2. Convertisseur selon la revendication 1, caractérisé en ce que le premier élément redresseur est constitué par une diode ($D_1$) connectée entre la charge (P) et l'extrémité (A) de l'inductance secondaire ($L_s$) éloignée du point milieu (B) du pont diviseur capacitif ($C_1$, $C_2$), tandis que le second et le troisième éléments redresseurs sont constitués par deux diodes ($D_2$, $D_3$), montées tête-bêche.

3. Convertisseur selon la revendication 1, caractérisé en ce que le premier élément redresseur est constitué par un thyristor ($Th_1$) connecté entre le point milieu du pont diviseur capacitif ($C_1$, $C_2$) et l'inductance secondaire ($L_s$), le second élément redresseur est constitué par un thyristor ($Th_2$) et le troisième élément redresseur est constitué par une diode ($D_3$), tandis que l'extrémité de l'inductance secondaire ($L_s$) située du côté du point milieu du pont diviseur capacitif ($C_1$, $C_2$) est reliée aux deux extrémités de ce pont diviseur respectivement par une diode ($D_4$) et par un autre thyristor ($Th_3$), la commutation sélective de ces différents thyristors ($Th_1$, $Th_2$, $Th_3$) permettant de passer successivement d'un régime abaisseur de tension à un régime en pont dynamique non élévateur de tension, puis à un régime élévateur de tension.

**Claims**

1. A chopped power supply converter comprising a primary inductance ($L_p$) in series with a controlled chopping means ($T_r$) between the two terminals of a DC power supply source, a series arrangement of a secondary inductance ($L_s$) magnetically coupled with the primary inductance ($L_p$) and a first rectifier device ($D_1$ or $Th_1$), and a parallel arrangement of a capacitor ($C_3$) and a load (P) having one end connected to one end of said series arrangement ($L_s$, $D_1$ or $Th_1$) and the other end connected to one of the terminals of the DC power supply source, characterized in that a capacitive divider bridge formed by two series capacitors ($C_1$, $C_2$) is connected between the two terminals of the DC power supply source, the other end of said series arrangement ($L_s$, $D_1$ or $Th_1$) is connected at the mid point (B) of the capacitive divider bridge, and in that a balancing device (E) is provided for permanently balancing the capacitive divider bridge ($C_1$, $C_2$), said balancing device being formed by an energy storage inductance ($L_e$) connected to the mid point (B) of the capacitive divider bridge ($C_1$, $C_2$) on the one hand, and to the junction point of second ($D_2$ or $Th_2$) and third ($D_3$) rectifier devices mounted in series and in an opposite direction between the terminal (OV) of the DC power supply source connected to the other end of the load (P) and the end (A) of the secondary inductance ($L_s$) remote from the mid point (B) of the capacitive divider bridge ($C_1$, $C_2$) on the other hand.

2. The converter according to claim 1, characterized in that the first rectifier device is formed by a diode ($D_1$) connected between the load (P) and the end (A) of the secondary inductance ($L_s$) remote from the mid point (B) of the capacitive divider bridge ($C_1$, $C_2$), whereas the second and third rectifier devices are formed by two diodes ($D_2$, $D_3$) mounted head to tail.

3. The converter according to claim 1, characterized in that the first rectifier device is formed by a thyristor ($Th_1$) connected between the mid point of the capacitive divider bridge ($C_1$, $C_2$) and the secondary inductance ($L_s$), the second rectifier device is formed by a thyristor ($Th_2$) and the third rectifier device is formed by a diode ($D_3$), whereas the end of the secondary inductance ($L_s$) located on the side of the mid point of the capacitive divider bridge ($C_1$, $C_2$) is connected to both ends of said capacitive divider bridge by a diode ($D_4$) and another thyristor ($Th_3$) respectively, the selective switching of these various thyristors ($Th_1$, $Th_2$, $Th_3$) allowing to changeover successively from a voltage dropping mode to a dynamic non voltage boosting mode, then to a voltage boosting mode.

**Patentansprüche**

1. Taktspeisungswandler mit einer primären Induktivität in Reihe mit einem gesteuerten Taktorgan ($T_r$), die zwischen den zwei Klemmen einer Gleichspannungsversorgung angeordnet sind, mit einer Reihenanordnung aus einer sekundären Induktivität ($L_s$), die magnetisch mit der primären Induktivität ($L_p$) gekoppelt ist, und einem ersten Gleichrichterelement ($D_1$ oder $Th_1$), und einer parallelen Anordnung aus einem Kondensator ($C_3$) und einer Last (P), deren einer Endpunkt mit einem der Endpunkte der genannten Reihenanordnung ($L_s$, $D_1$ oder $Th_1$) und deren anderer Endpunkt mit einer der Klemmen der Gleichspannungsquelle verbunden ist, dadurch gekennzeichnet, daß eine aus zwei in Reihe geschalteten Kondensatoren ($C_1$, $C_2$) gebildete, kapazitive Teilerbrücke zwischen die zwei Klemmen der Gleichspannungsquelle geschaltet ist, der andere Endpunkt der genannten Reihenanordnung ($L_s$, $D_1$ oder $Th_1$) mit dem Mittelpunkt (B) der kapazitiven Teilerbrücke verbunden ist und daß eine Ausgleicheinrichtung (E) vorgesehen ist, um fortlaufend die kapazitive Teiler-

brücke ($C_1$, $C_2$) auszugleichen, wobei die Ausgleicheinrichtung von einer Induktivität ($L_e$) zur Energiespeicherung gebildet ist, die einerseits mit dem Mittelpunkt (B) der kapazitiven Teilerbrücke ($C_1$, $C_2$) und andererseits mit dem Verbindungspunkt eines zweiten ($D_2$ oder $Th_2$) und eines dritten ($D_3$) Gleichrichterelementes verbunden ist, die in Reihe und mit umgekehrten Richtungssinn zwischen der Klemme (OV) der Gleichspannungsquelle geschaltet sind, die mit dem anderen Endpunkt der Last (P) und dem Endpunkt (A) der sekundären Induktivität ($L_s$) verbunden ist, der von dem Mittelpunkt (B) der kapazitiven Teilerbrücke ($C_1$, $C_2$) entfernt ist.

2. Wandler nach Anspruch 1, dadurch gekennzeichnet, daß das erste Gleichrichterelement von einer Diode ($D_1$) gebildet ist, die zwischen der Last (P) und dem von dem Mittelpunkt (B) der kapazitiven Teilerbrücke ($C_1$, $C_2$) entfernt liegenden Endpunkt (A) der sekundären Induktivität ($L_s$) verbunden ist, während das zweite und das dritte Gleichrichterelement aus zwei entgegengesetzt geschalteten Dioden ($D_2$, $D_3$) bestehen.

3. Wandler nach Anspruch 1, dadurch gekennzeichnet, daß das erste Gleichrichterelement aus einem Thyrisor ($Tr_1$) besteht, der zwischen dem Mittelpunkt der kapazitiven Teilerbrücke ($C_1$, $C_2$) und der sekundären Induktivität ($L_s$) verbunden ist, daß das zweite Gleichrichterelement aus einem Thyristor ($Th_2$) und das dritte Gleichrichterelement aus einer Diode ($D_3$) besteht, während der Endpunkt der sekundären Induktivität ($L_s$), der sich auf der Seite des Mittelpunktes der kapazitiven Teilerbrücke ($C_1$, $C_2$) befindet, mit den zwei Endpunkten dieser Teilerbrücke über eine Diode ($D_4$) bzw. einem weiteren Thyristor ($Th_3$) verbunden ist, wobei das wahlweise Umschalten dieser verschiedenen Thyristoren ($Th_1$, $Th_2$, $Th_3$) ermöglicht, aufeinanderfolgend um einen Betriebszustand mit absenkender Spannung zu einem Betriebszustand mit dynamischer Brücke ohne Anheben der Spannung und dann zu einem Betriebszustand mit anhebender Spannung zu gelangen.

FIG.1

FIG. 2

FIG. 3

FIG. 4

FIG. 5